# NEW EUROPEAN PATENT SPECIFICATION

(11) **EP 0 803 278 B2**
(45) Date of publication and mention of the opposition decision: **02.01.2004**
(45) Mention of the grant of the patent: 25.10.2000
(21) Application number: 96302822.0
(22) Date of filing: 22.04.1996
(51) Int. Cl.: B01D 53/56, B01D 53/86

(54) **Integrated catalytic/non-catalytic process for selective reduction of nitrogen oxides**
Integriertes katalytisches/nichtkatalytisches Verfahren zur selektiven Reduktion von Stickstoffoxiden
Procédé intégré catalytique/non-catalytique pour la réduction sélective des oxydes d'azote

(43) Date of publication of application: 29.10.1997
(73) Proprietor: Applied Utility Systems, Inc., Irvine, California 92715 (US)
(72) Inventor: Mansour N Mansour, California 92720 (US); Sudduth, Bruce C., California 91719 (US)
(74) Representative: Brereton, Paul Arthur

(56) References cited:
- WO-A-91/07219
- WO-A-95/27554
- DE-A- 3 627 086
- US-A- 5 047 220
- US-A- 5 233 934

## Description

This application relates to processes for reducing nitrous oxide, NO, sometimes referred to as NOₓ, in combustion zone effluent gas streams.

More particularly, the invention concerns a selective catalytic reduction ("SCR") process which, under limited circumstances, employs pretreatment of a combustion zone effluent gas stream by a selective non-catalytic reduction ("SNCR") process, i.e., only when the NOₓ content of the SCR effluent exceeds a preselected maximum value.

In another respect the invention pertains to an integrated SCR-SCNR NOₓ reduction process which minimizes the cost of chemical reducing agents.

Carbonaceous fuels can be made to burn more completely, with reduced emissions of carbon monoxide and unburned carbon and/or hydrocarbons, when the air/fuel ratio employed causes a high flame temperature. When fossil fuels are used in suspension fired boilers such as large utility boilers, flame temperatures above about 1093°C (2000°F), to about 1643°C (3000°F), are generated. Such high temperatures, as well as hot spots of higher temperatures, cause the production of thermal NOₓ, the temperatures being so high that atomic oxygen and nitrogen are formed and chemically combine as nitrogen oxides. Nitrogen oxides, i.e., NO or NO₂ ("NOₓ"), can also be formed as the result of oxidation of nitrogen-containing species in the fuel, such as those found in heavy fuel oil, municipal solid waste and coal. NOₓ derived from nitrogenous compounds contained in the fuel can form even in circulating fluidized bed boilers which operate at temperatures that typically range from 704°C (1300°F) to 927°C (1700°F).

NOₓ is a troublesome pollutant found in the combustion effluent stream of boilers and other combustion equipment. Nitrogen oxides contribute to tropospheric ozone, a known threat to health, and can undergo a process known as photochemical smog formation, through a series of reactions in the presence of sunlight and hydrocarbons. Moreover, NOₓ is a significant contributor to acid rain and has been implicated as contributing to the undesirable warming of the atmosphere, commonly referred to as the "greenhouse effect".

Recently, various processes for reducing NOₓ in combustion effluents have been developed. They can generally be segregated into two categories: selective and non-selective. The selective processes include SCR and SNCR processes.

SCR processes involve passing the combustion zone effluent across or through a catalyst bed in the presence of NH₃, to achieve NOₓ reductions as high as 50%-95% or higher. SNCR processes involve introducing NOₓ reducing agents such as NH₃ into the effluent at higher temperatures than SCR processes, to achieve NOₓ reductions of up to 50% or greater.

SCR processes for reducing NOₓ are well known and utilize a variety of catalytic agents. For instance, in European Patent Application No. 210,392, Eichholtz and Weiler disclose the catalytic removal of nitrogen oxides using activated charcoal or activated coke, as a catalyst, with the addition of NH₃. Kato et al., in U.S. Patent No. 4,138,469, and Henke in U.S. Patent No. 4,393,031, disclose the catalytic reduction of NOₓ with NH₃, using platinum group metals and/or other metals such as titanium, copper, molybdenum, vanadium, tungsten, or oxides thereof to achieve the desired catalytic reduction.

Another catalytic reduction process is disclosed by Canadian patent No. 1,100,292 to Knight, which discloses the use of a platinum group metal, gold, and/or silver catalyst deposited on a refractory oxide. Mori et al., in U.S. Patent No. 4,107,272 disclose the catalytic reduction of NOₓ using oxysulfur, sulfate, or sulfite compounds of vanadium, chromium, manganese, iron, copper, and nickel with the addition of NH₃ gas.

In multi-phase catalytic system, Ginger, in U. S. Patent No. 4,268,488, discloses treating a NOₓ containing effluent to a first catalyst comprising a copper compound such as copper sulfate and a second catalyst comprising metal combinations such as sulfates of vanadium and iron or tungsten and iron on a carrier, in the presence of NH₃.

SNCR processes were also proposed to remove NOₓ from combustion gas effluent streams by injecting NH₃ or an NH₃ precursor in the presence of oxygen, without using catalysts. For example, such processes are disclosed in U.S. Patent No. 3,900,554 and in U.S. Patents Nos. 4,777,024; 5,057,293; and 4,780,289.

In addition, combination SNCR-SCR processes have been proposed, such as the processes disclosed in U.S. Patents Nos. 4,978,514; 5,139,764; 4,286,467; 4,302,431 and 5,233,934.

Prior combined SNCR-SCR processes sought to avoid handling NH₃ and/or sought to reduce catalyst costs, focusing on SNCR as the primary NOₓ reduction stage. SCR was relegated to a secondary role, i.e., to remove other pollutants from the SNCR effluent and to minimize catalyst consumption.

However, we have determined that the use of SNCR as the primary stage for NOₓ removal is not cost effective and results in substantially increased chemical consumption which more than offsets any savings from reduced catalyst consumption. Moreover, overfeeding the reducing chemicals to the SNCR stage to produce excess NH₃ in the feed to the SCR stage, as in certain prior processes, causes poor chemical utilization and severe NOₓ/NH₃ stratification at the inlet to the SCR stage. This stratification greatly diminishes the effectiveness of SCR, with poor NOₓ removal and high NH₃ breakthrough from the SCR stage.

We have now discovered that the overall economics of NOₓ removal from combustion zone affluent gas streams can be significantly improved and the technicallimitations caused by NOₓ/NH₃ stratification can be significantly reduced by an improved integrated SCR/SNCR process. Our process is an improvement on prior combination SNCR/SCR processes. These prior processes included the steps of contacting the effluent gas stream in an SNCR zone with NH₃ to reduce part of the NOₓ in the stream and then contacting the SNCR zone effluent in an SCR zone with NH₃ and a NOₓ reduction catalyst, to further reduce the NOₓ content of the gas stream. Our improvement in such prior combined SCR/SNCR processes comprises the steps of injecting NH₃ intothe gas stream upstream of the SCR zone to provide a mixed gas/ammonia stream, providing sufficient catalyst in the SCR zone to reduce the NOₓ content of the SCR zone effluent to a preselected maximum value at a design total NOₓ throughput and at a design total gas stream throughput, and injecting NH₃ into the SNCR zone only when the NOₓ content of the SCR effluent exceeds this preselected maximum value.

As used herein, the term "preselected maximum value" means the desired or target maximum limit of the concentration of NOₓ in the SCR zone effluent. The desired maximum concentration or target maximum concentration limit is commonly established by reference to maximum NOₓ emissions standards set by regulations, laws or recommendations promulgated by cognizant governmental authorities, quasi-governmental authorities or industry associations. Based on such laws, regulations and recommendations or other considerations, the designer and/or operator of combustion equipment preselects a specific target or desired maximum NOₓ concentration limit value which the combustion facility is not to exceed and that "preselected maximum value" is then used in operating the facility according to the claimed process. this preselected maximum value can be the same as the maximum value set by the law, regulations, or recommendation or, to provide a safety margin, the preselected maximum value can be less than the maximum value set by the law, regulation, or recommendation. Further, the preselected maximum value can be changed from time to time in response to changes in the laws, regulations or recommendations or in response to historical experience with the same or similar combustion systems. Prior to any such change however, the preselected numerical value.

The term "design total NOₓ throughput" refers to the total NOₓ flow rate (e.g., pounds per hour) in the combustion zone effluent, as determined by material balance calculations made by the combustion system designer. These calculations are based on specific "design" parameters, such as measured NOₓ concentration in the combustion zone effluent, fuel composition, fuel flow rates, air flow rates, combustion efficiency, etc.

The term "design total gas stream throughput" means the total gas stream flow rate (e.g., pounds per hour, cubic foot per minute, etc.) of the combustion zone effluent gas as determined by material balance calculations made by the combustion system designer, based on specific "design" parameters, such as fuel composition, fuel flow rates, airflow rates, combustion efficiency, etc.

The amount of catalyst provided in the SCR zone is sufficient, at design total gas stream throughput and at design NOₓ throughput, to provide the necessary contact time under the ambient reaction conditions to achieve a preselected maximum NOₓ concentration in the SCR effluent at any condition of gas stream throughput and/or NOₓ throughput up tothese design maximum rates. When total gas stream throughputs or NOₓ throughputs to the SCR stage which are above these design maxima, the NOₓ content of the SCR effluent will rise above the preselected maximum, because the catalyst quantity is insufficient to accommodate throughputs above these maxima.

If the NOₓ content of the SCR effluent exceeds the preselected maximum value, and only if this occurs, NH₃ is injected into the SNCR zone. NH₃ is injected into the SNCR zone at the minimum Normalized Stoichiometric Ratio mole ratio ("NSR") to reduce the NOₓ throughput in the SCR zone to below the design maximum throughput. (As used herein, "NSR" means the actual NH₃: NOₓ mole ratio in the SNCR stage divided by the stoichiometric NH₃ :NOₓ ratio in this stage.) This minimizes or entirely prevents NH₃ breakthrough from the SNCR zone.

Furthermore, NH₃ is injected into the SNCR stage at the optimum temperature for maximum overall NH₃ utilization. As will be explained below, there is an optimum temperature range for NH₃ injection into the SNCR stage which will maximize the overall NH₃ utilization of the combined SCR/SNCR process. In a preferred embodiment of the invention, hydrogen (H₂ is also injected into the SNCR stage and, optionally at the inlet to the SNCR stage, to broaden the optimum temperature range for NH₃ utilization in this stage.

In a further preferred embodiment of the invention, rapid mixing baffles are positioned in the gas stream upstream of the SNCR stages and the SCR stage, to further reduce the possibility of NH₃/NOₓ stratification by turbulent mixing of the components of the SNCR effluent and turbulent mixing of the NH₃ and/or hydrogen injected into the SNCR effluent upstream of the SCR zone.

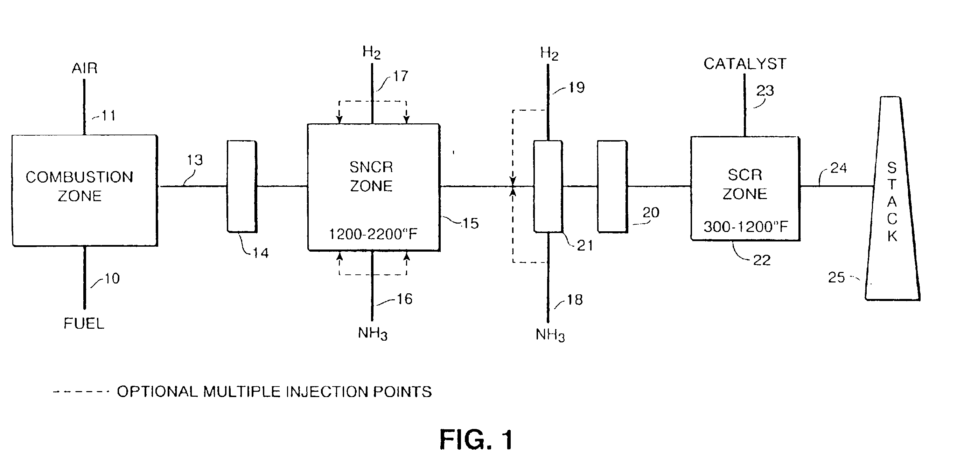

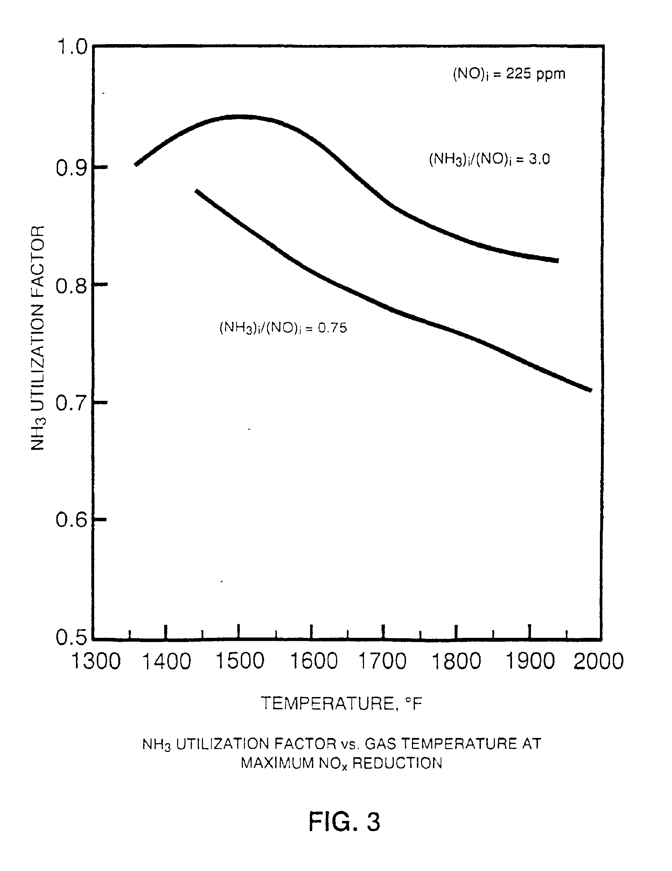

The principles and practice of the invention according to the best mode presently contemplated are further illustrated in the accompanying drawings. Fig. 1 is a flow sheet which schematically depicts a typical installation. A carbonaceous fuel 10 is mixed with air 11 and burned in a combustion zone 12. The fuel 10 is typically a fossil fuel which is burned to fire electric utility and industrial steam boilers. The fuel 10 may include coal, fuel oil or natural gas. In addition to utility and industrial boilers, the invention has application in controlling NOₓ emissions from fluidized bed boilers, fuel fired petrochemical furnaces, cement kilns, glass melting furnaces, hazardous waste incinerators and even in methanation plants and landfill gas removal applications.

The high temperature effluent gases 13 from the combustion zone are, optionally passed through rapid mixing baffles 14 to increase the chemical and thermal homogeneity of the combustion zone effluent 13. At total gas stream and total NOₓ throughputs which are below the design throughput of the system, the combustion zone effluent 13 passes through the SNCR zone 15 without injection of NH₃ 16 or hydrogen 17. When the gases have cooled to an appropriate temperature for SCR processing, NH₃ 18 and, optionally, hydrogen 19 are injected, preferably at or from the edges of the rapid mixing baffles 21, located just upstream of the SCR zone 22. The mixed combination SNCR zone effluent, NH₃ and hydrogen are contacted in the SCR zone 22 with the NOₓ reduction catalyst 23. The SCR zone effluent 24, with NOₓ content at or below the design maximum, is then vented to the atmosphere through stack 25.

As previously noted our process employs SCR as the primary stage for NOₓ removal, because SCR provides essentially 100 percent utilization of injected NH₃ and, thus, offers the highest NOₓ removal with the minimum chemical consumption. The temperature of the combustion gas at which contact with the catalyst is effected in the SCR stage will suitably range from about 149°C (300°F) to 649°C (1200°F.)

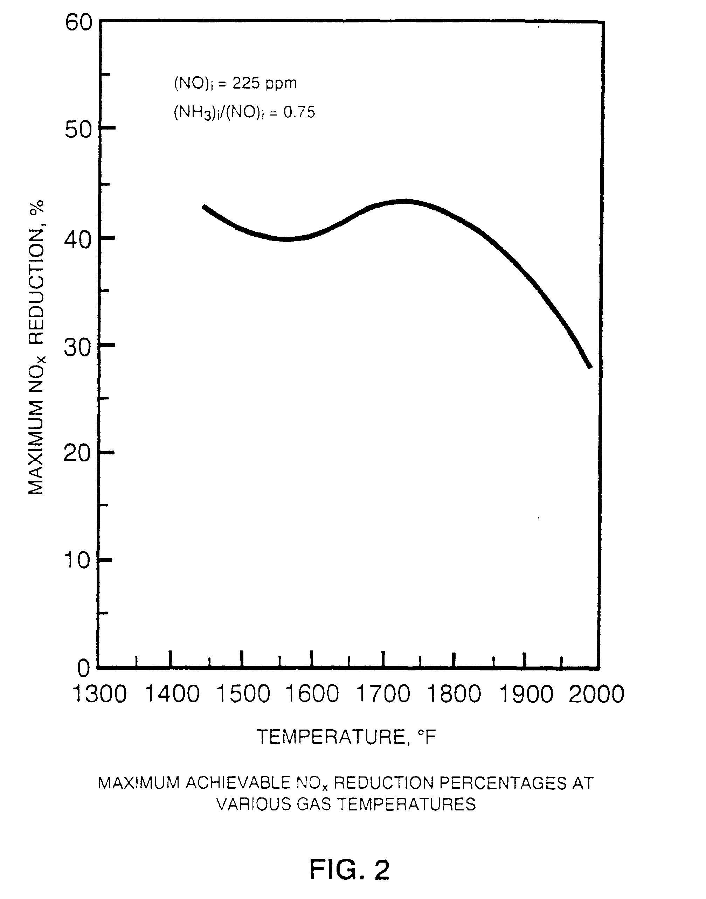

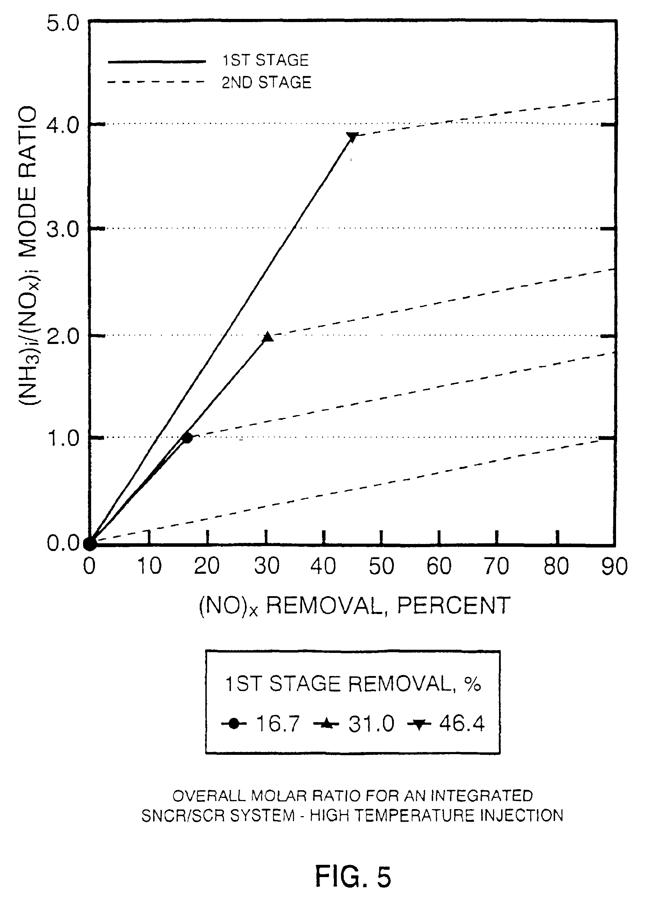

SNCR is only used when the maximum NOₓ removal capability of the SCR stage is reached and exceeded. The combustion gas temperature at which NH₃ is injected in the SNCR stage will range between about 649°C (1200°F) and 1204 °C (2200°F.). Chemical utilization is maximized in the SNCR stage by minimizing the NSR in this stage and by using hydrogen to expand the temperature window for the selective reduction of NOₓ with NH₃. H₂ injection is used for achieving maximum NOₓ removal and high NH₃ utilization in the SNCR stage at low NSR. By selecting the H₂/NH₃ mole ratio and the chemicals injection temperature, high NOₓ removal and high total NH₃ utilization can be simultaneously achieved in the SNCR stage as depicted in Figs. 2 and 3. H₂ also functions to reduce NH₃ breakthrough from the SNCR stage.

In the preferred embodiment of this invention, rapid mixing baffles 14, 20, and 21 are used in the integrated system prior to the injection of chemicals, during the injection of chemicals, and after the injection of chemicals. The purpose of using the baffles 14 prior to the injection of chemicals 16, 17, 18, 19 is to ensure uniform temperature and gaseous species distribution, thus maximizing the NOₓ reduction by the injected chemicals. Baffles 21 are used during the injection of chemicals to enhance chemical mixing with the flue gas. Baffles, 20, installed downstream of the injection of chemicals, further reduce temperature and chemical species stratification upstream of the SCR stage 22.

In a preferred embodiment of this invention, chemicals are injected in three locations within the integrated low NOₓ system. The first and preferred location is upstream of the SCR system. NH₃ only is injected in this location. The sole purpose for the injection of NH₃ in this location is to effect the reduction of NOₓ on the surface of the catalyst. The amount of NH₃ injected is increased to maintain a stack NOₓ value and/or NH₃ breakthrough below a certain threshold.

NH₃ or H₂/NH₃ are injected in the SNCR Stage 2 only if the stack NOₓ threshold is not achieved or stack NH₃ threshold is exceeded. It is expected that up to three discretely separate injection manifolds will be used. Each of these manifolds may inject NH₃ only, H₂ only, or a combination of the two chemicals. NSR would range from 0 to 2, and H₂/NH₃ mole ratio would range from 0 to 5.

In the preferred embodiment of this invention, the NH₃ injection would be staged, thus reducing the NSR ratio for each stage and improving chemical utilization. The amount and location of H₂ injection would depend on injection temperature and NH₃-H₂ mole ratio.

Prior processes used SNCR as the primary method for NOₓ reduction. Certain of these processes increased the NSR in the SNCR stage and used NH₃ breakthrough from this stage to feed NH₃ to the SCR stage. It was disclosed that higher NSR in the SNCR stage increases the NOₓ removal in this stage and the excess NH₃ was used to effect further reduction of NOₓ in the SCR stage. However, experience does not demonstrate the economic attractiveness of this approach.

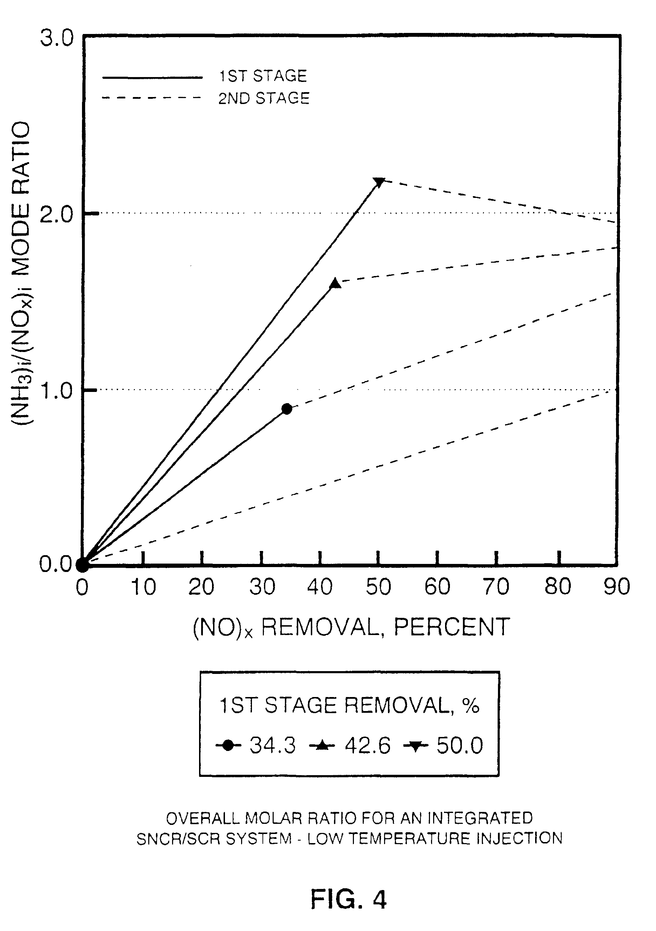

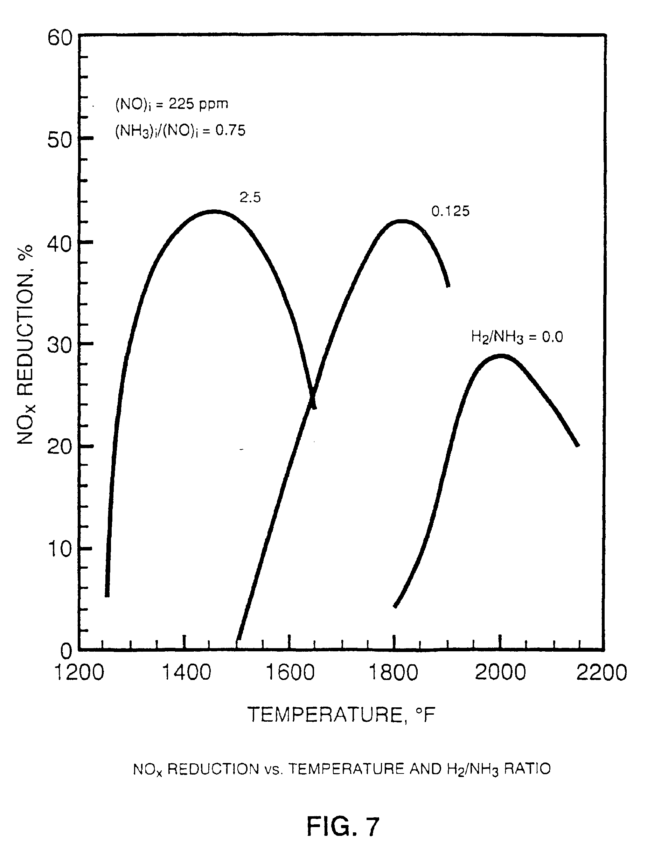

The data in Fig. 4 are for low injection temperatu re conditions, and data in Fig. 5 are for high injection temperature conditions. The solid lines show the mole ratio and the corresponding NOₓ removal obtained with the use of a nitrogenous reducing chemical in the SNCR stage. The dotted lines depict the overall mole ratio required to achieve a specific overall NOₓ removal with an integrated SNCR/SCR system.

Thus, increasing the NOₓ removal achieved in the SNCR stage increases the mole ratio required to achieve a specific overall integrated system NOₓ removal. For an overall integrated system NOₓ removal of 90 percent, the mole ratio is between two to four times the mole ratio for a stand alone SCR system.

The penalty in chemical consumption is less for low temperature injection conditions because of the reduced tendency for NH₃ oxidation at low temperatures, as shown in Fig. 4. Nevertheless, chemical consumption can still more than double that used in our integrated SCR/SNCR system, in which SCR is employed as the primary stage for NOₓ removal.

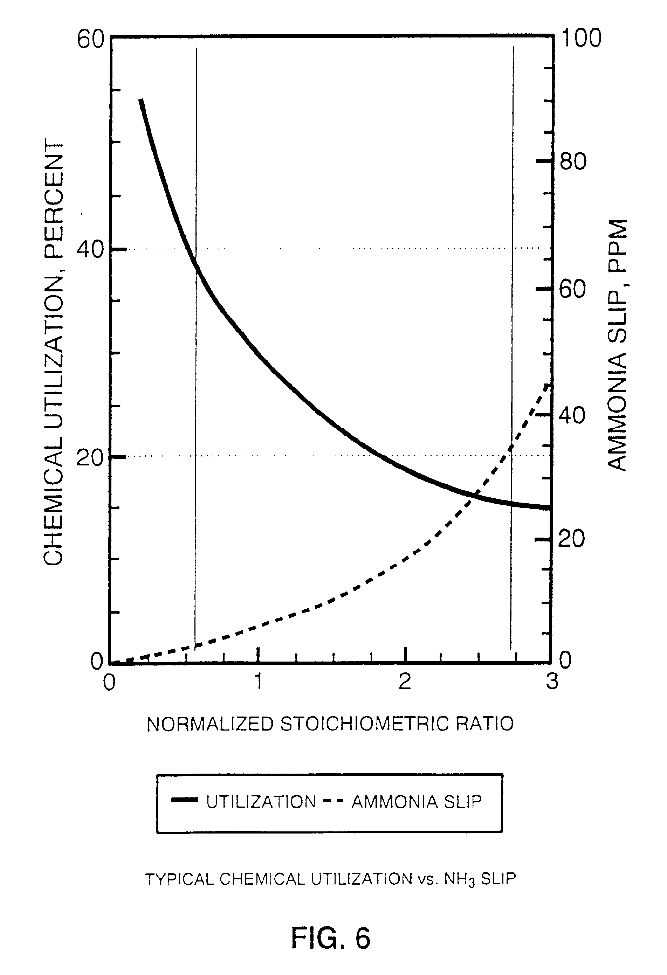

Typical curves illustrating NH₃ utilization and breakthrough in an SNCR stage are depicted in Fig. 6. The data show that increasing the NSR reduces chemical utilization and increases NH₃ breakthrough. Forthis reason, in our process we limit the mole ratio in the SN-CR stage to control NH₃ breakthrough to below 20 percent of the initial NOₓ concentration at the inlet to the SNCR stage.

Reducing the mole ratio in the SNCR stage not only improves chemical utilization but to also reduces NH₃ concentration as well as NH₃/NOₓ concentration stratification at the discharge of the SNCR stage.

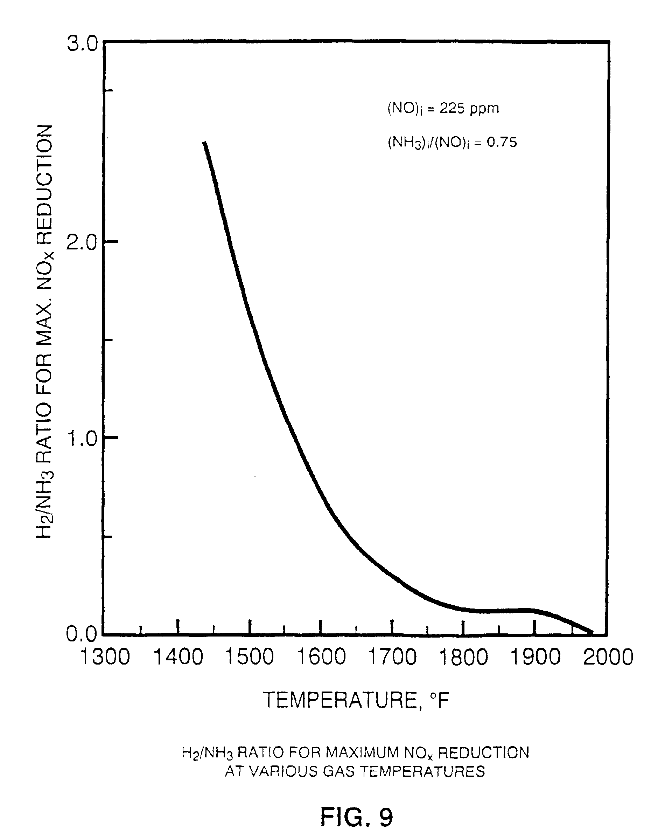

In addition to the NSR, chemical utilization in the SNCR stage is greatly influenced by reaction temperature. Fig. 7 depicts the change in NOₓ reduction with temperature as generated by analytical modeling. As discussed above, the NOₓ reduction/temperature relationship has the shape of a bell curve with maximum NOₓ removal obtained at a specific temperature. Increasing or reducing the reaction temperature results in reducing the NOₓ removal. The injection of H₂ with NH₃ reduces the optimum reaction temperature and the magnitude of this temperature reduction depends upon the amount of H₂ used. An increase in H₂/NH₃ mole ratio produces a larger reduction in optimum temperature as shown in Fig. 7.

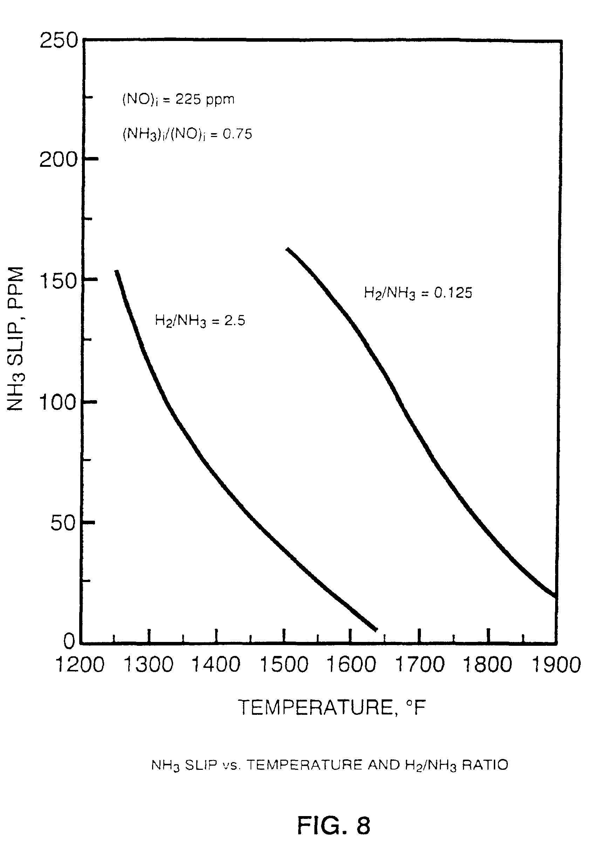

NH₃ breakthrough from the SNCR stage is also dependent upon reaction temperature. The dependence of NH₃ breakthrough on temperature is shown in Fig. 8. Fig. 8 shows that NH₃ breakthrough rapidly increases with a reduction in temperature. Fig. 8 shows that, for a given temperature, injection of H₂ with NH₃ reduces NH₃ breakthrough. For example, for a reaction temperature of 815°C (1500°F), increasing H₂/NH₃ mole ratio from 0.125 to 2.5 reduces NH₃ breakthrough from 150 ppm to 40 ppm. H₂ injection can thus be used to control NH₃ breakthrough as well as to improve NH₃ utilization in the SNCR stage.

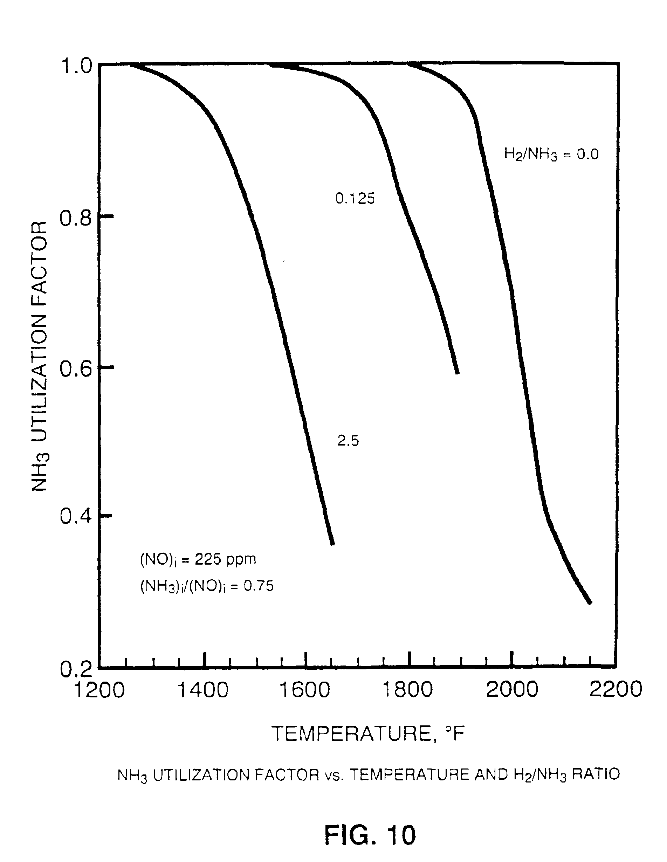

Maximum NOₓ reduction as a function of temperature can be achieved by changing H₂/NH₃ mole ratio. These data, determined by analytical modeling, are depicted in Fig. 9. The data show that at temperatures between 982°C (1800°F) and 1093°C (2000°F), little or no H₂ injection is needed. As the reaction temperature is reduced, H₂ requirements to maintain optimum NOₓ reduction is increased.

As discussed above, our invention provides improved chemical utilization. This is achieved in the SNCR stage by reducing the NOₓ removal requirement in this stage and, in turn, the required NSR. It is also achieved by improving total NH₃ utilization, i.e., the sum of NH₃ used for NOₓ reduction and NH₃ breakthrough. In an integrated SCR/SNCR system, maximizing total NH₃ utilization will ultimately result in the maximum efficiency of use of chemicals. NH₃ utilization factor as a function of temperature is presented in Fig. 10. Fig. 10. shows that, depending on H₂/NH₃ mole ratio, an optimum temperature can be defined to achieve 100 percent total NH₃ utilization. Such temperature, for example, is 982°C (1800°F) for H₂/NH₃ mole ratio of 0.0, and 871°C (1600°F) for H₂/NH₃ mole ratio of 0.125.

However, optimum temperature for maximum total NH₃ utilization does not produce the maximum NOₓ removal in the SNCR stage. As shown in Fig. 7, injecting NH₃ at optimum temperature for maximum total NH₃ utilization results in less than one-third the NOₓ removal achieved by injecting NH₃ at the optimum temperature for maximum NOₓ removal.

Preferably, H₂ is injected to achieve maximum NOₓ reduction in the SNCR stage at all temperature conditions. The use of H₂ maintains essentially a constant NOₓ removal over a broad temperature range. The amount of H₂ used changes with temperature as shown in Fig. 9. H₂ injection is also used to maximize total NH₃ utilization. While maintaining maximum NOₓ removal in the SNCR stage, the use of H₂ allows NH₃ utilization to range between 70 and 90 percent.

In addition to the chemical factors discussed above, the NOₓ removal performance of integrated system is improved in our invention by reducing the stratification of temperature and chemical species concentration within the flue gas. Flue gas temperature stratification exists in a utility boiler application for a variety of reasons. Burners malfunction can result in extended flames and the creation of hot furnace regions in the convective section of the furnace. Heat transfer surface fouling can lead to non-uniform heat absorption profile resulting in temperature stratifications. Many boilers are designed with divided furnaces to bypass portions of the flue gas around the reheat and/or superheat sections of the boiler, allowing the control of steam temperature with minimal use of stream attemperation. The use of flue gas bypass results in temperature stratification at the discharge of the economizer or at the inlet to the SCR system. Temperature stratification in the SNCR stage influences NH₃ reduction of NOₓ (Fig. 7). Localized high temperatures due to severe stratification can result in the oxidation of NH₃ to NOₓ. Localized low temperatures result in high NH₃ breakthrough.

Like any other chemical reaction system, gaseous species stratification in a NOₓ reduction system is detrimental. As discussed above, NH₃ utilization in the SNCR stage is greatly dependent upon NSR. The stratification of NOₓ may result in "localized" high NSRs, leading to poor NH₃ utilization. Reaction time of H₂ with NH₃ is in the order of milli-seconds. For the injected H₂ to be fully utilized it is important that other gaseous species (NOₓ and NH₃) are uniformly distributed.

Preferably, stratification is further minimized in the best mode of our system with the use of rapid mixing baffles, e.g., the "delta wings" developed by Balcke-Dürr of Germany and others for a broad range of flue gas mixing applications. The rapid mixing baffles are positioned in the flow path of the flue gas. The size and shape of the baffles and their orientation with respect to the flue gas flow direction are selected to induce a large downstream recirculation field. The recirculation enhances gas mixing, thus reducing or almost totally eliminating temperature or gaseous species stratification.

In the best mode of our system, the baffles are installed upstream of the NH₃ and H₂ injection location to ensure uniformity of flue gas temperature and gaseous species distribution. Preferably, the rapid mixing baffles are also used for the injection of chemicals. The injection of chemicals downstream of the baffles thus provides for mixing the chemicals with the flue gas. Finally, the baffles are used to mix the flue gas downstream of the SNCR stage to reduce or substantially eliminate temperature and chemical species stratification at the inlet to the SCR stage.

In the preferred practice of our invention, the NH₃ is injected intothe SNCR zone at multiple discretely separate injection locations to reduce the NSR for each injection location and improve chemical utilization. In the best mode of our invention there are at least two of these discrete separate injection locations. Likewise, hydrogen is injected into the SNCR zone at multiple discretely separate injection locations. This expands the temperature range for ammonia NH₃ reduction of NOₓ, improves overall chemical utilization and reduces NH₃ breakthrough from the SNCR stage. The NH₃ and hydrogen can be injected separately into the SNCR stage or as mixtures in each injection location.

Thus, according tothe preferred practice of our invention, the NSR in the SNCR stage ranges between 0 and 2 and the H₂:NH₃ mole ratio in the SNCR stage ranges between 0 and 5. Under these conditions NH₃ breakthrough from the SNCR zone is maintained at or below 20 percent of the inlet NOₓ concentration of the gases entering the SNCR stage. The NH₃ :NOₓ mole ratio of the process is selected to maintain NH₃ in the effluent from the SCR stage below 20 ppm.

## Claims

1. An integrated SCR-SNCR process for reducing the NOₓ content of a gas stream effluent from a combustion system, said effluent gas stream containing combustion products, including NOₓ said process including
contacting said gas stream in an SNCR zone with NH₃ to reduce part of the NOₓ in said stream, and
contacting the SNCR zone effluent in an SCR zone with NH₃ and a NOₓ reduction catalyst, to further reduce the NOₓ content of said gas stream,
comprising:
a) injecting NH₃ into said gas stream downstream of said SNCR zone to provide a mixed gas-ammonia stream, the quantity of NH₃ injection being just sufficient to effect the NOₓ reduction of step (b);
b) providing sufficient catalyst in said SCR zone to reduce the NOₓ content of the SCR zone effluent to a preselected maximum value at the design total NOₓ throughput of said system and at the design total gas stream throughput of said system; and
c) injecting NH₃ into said SNCR zone only when the NOₓ content of the SCR zone effluent exceeds said preselected maximum value, the NH₃ being injected into the SNCR zone at the minimum Normalised Stoichiometric Ratio to reduce the NOₓ throughput in the SCR zone to below the design maximum throughput..

## Patentansprüche

1. Integriertes SCR/SNCR-Verfahren zur Reduzierung des NOx-Gehalts eines Gasstromabflusses aus einem Verbrennungssystem, wobei der genannte Abflußgasstrom Verbrennungsprodukte einschließlich NOx enthält, wobei das genannte Verfahren die folgenden Schritte umfaßt:
Kontaktieren des genannte Gasstroms in einer SNCR-Zone mit NH₃, um einen Teil des NOx in dem genannten Strom zu reduzieren, und
Kontaktieren des SNCR-Zonen-Abflusses in einer SCR-Zone mit NH₃ und einem NOx-Reduktionskatalysator, um den NOx-Gehalt des genannten Gasstroms weiter zu reduzieren,
umfassend die folgenden Schritte:
a) Injizieren von NH₃ in den genannten Gasstrom hinter der genannten SNCR-Zone, um einen gemischten Gas/Ammoniakstrom zu erzeugen, wobei die NH₃-Injektionsmenge gerade ausreicht, um die NOx-Reduktion von Schritt (b) zu bewirken;
b) Bereitstellen von ausreichend Katalysator in der genannten SCR-Zone, um den NOx-Gehalt des SCR-Zonenabflusses auf einen vorgewählten Höchstwert beim theoretischen NOx-Gesamtdurchsatz des genannten Systems und beim theoretischen Gesamtgasstromdurchsatz des genannten Systems zu reduzieren; und
c) Injizieren von NH₃ in die genannte SNCR-Zone nur dann, wenn der NOx-Gehalt des SCR-Zonen-Abflusses den genannten vorgewählten Höchstwert überschreitet, wobei das NH₃ mit dem minimalen normalisierten stöchiometrischen Verhältnis in die SNCR-Zone injiziert wird, um den NOx-Durchsatz in der SCR-Zone auf einen Wert unterhalb des theoretischen Höchstdurchsatz zu reduzieren.

## Revendications

1. Procédé SCR-SNCR intégré pour réduire la teneur en NOₓ d'un effluent de courant de gaz provenant d'un système de combustion, ledit courant de gaz effluent contenant des produits de combustion, incluant du NOₓ, ledit procédé comprenant
mettre ledit courant de gaz en contact avec du NH₃ dans une zone SNCR, afin de réduire une partie du NOₓ dans ledit courant, et
mettre l'effluent de la zone SNCR en contact avec du NH₃ et un catalyseur de réduction de NOₓ dans une zone SCR, afin de réduire encore la teneur en NOₓ dudit courant de gaz,
comprenant :
a) injecter du NH₃ dans ledit courant de gaz en aval de ladite zone SNCR afin de fournir un courant mélangé de gaz-ammoniac, la quantité d'injection de NH₃ étant juste suffisante pour effectuer la réduction de NOₓ de l'étape (b);
b) fournir suffisamment de catalyseur dans ladite zone SCR pour réduire la teneur en NOₓ de l'effluent de la zone SCR, à une valeur maximale présélectionnée au débit nominal total de NOₓ dudit système et au débit nominal total de courant de gaz dudit système; et
c) injecter du NH₃ dans ladite zone SNCR seulement lorsque la teneur en NOₓ de l'effluent de la zone SCR dépasse ladite valeur présélectionnée, le NH₃ étant injecté dans la zone SNCR selon le rapport stoechiométrique normalisé minimal pour réduire le débit de NOₓ dans la zone SCR à moins du débit nominal maximal.
